# EUROPÄISCHE PATENTSCHRIFT

(11) **EP 1 527 819 B1**
(45) Veröffentlichungstag und Bekanntmachung des Hinweises auf die Patenterteilung: **13.08.2008**
(21) Anmeldenummer: 04025255.3
(22) Anmeldetag: 23.10.2004
(51) Int. Cl.: B03C 7/08, B65G 15/44

(54) **Band eines elektrischen Bandabscheiders**
Belt for an electrical belt separator
Ruban pour un séparateur à ruban électrique

(30) Priorität: 03.11.2003 DE 10351180
(43) Veröffentlichungstag der Anmeldung: 04.05.2005
(73) Patentinhaber: K+S KALI GmbH, 34131 Kassel (DE)
(72) Erfinder: Reinhardt, Mathias, 36266 Heringen (DE); Taufertshöfer, Norbert, 64646 Heppenheim (DE); Pfeifer, Volker, 64678 Lindenfels (DE)
(74) Vertreter: Filbry, Eberhard

(56) Entgegenhaltungen:
- EP-A- 1 007 215
- GB-A- 146 240
- GB-A- 545 413
- US-A- 3 915 025

## Beschreibung

Die Erfindung betrifft ein Band eines elektrischen Bandabscheiders zum elektrostatischen Trennen von Bestandteilen eines Gemisches, wobei das Band mehrere längs der Laufrichtung des Bandes beabstandet und parallel zueinander verlaufende Gurte aufweist, wobei die Gurte durch quer zur Laufrichtung des Bandes beabstandet zueinander verlaufende Stege untereinander verbunden sind.

Neben Bändern für Bandabscheider sind auch Transportbänder zum Transport von Stückgütern oder rieselfähigen Gütern bekannt (GB 142 240). Solche Bänder bestehen aus Streifen aus Leder, die durch versetzt zueinander angeordnete Stege miteinander verbunden sind. An einer Vielzahl von Stegen finden sich Mitnehmer zur Mitnahme des Transportgutes.

Elektrische Bandabscheider zum Trennen von Bestandteilen eines Gemisches, z. B. von Kohlestaub und Asche, sind aus der Technik hinreichend bekannt. Ein solcher Bandabscheider umfasst üblicherweise zwei Plattenelektroden, die auf entgegengesetzten Seiten längs einer Mittellinie angeordnet sind, wobei ein elektrisches Feld zwischen den beiden Elektroden aufgebaut wird. Durch elektrische Aufladung der unterschiedlichen Bestandteile eines solchen Gemisches kann durch den elektrischen Bandabscheider eine Trennung in die einzelnen Fraktionen Vorgenommen werden. Diese Technik ist hinreichend bekannt, wobei beispielsweise auf die EP 311 617 oder auch auf die EP 1007215 hingewiesen wird. Insbesondere aus der EP 311 617 ist allerdings auch ein Band bekannt, das als Gewebe ausgebildet ist, wobei die das Gewebe bildenden Fäden einen Abstand derart aufweisen, dass dieses Band für die Bestandteile des Gemisches der einzelnen Partikel durchlässig ist. Das Material, das zur Herstellung eines solchen Bandes verwendet wird, widersteht hohen Temperaturen, und ist auch widerstandsfähig gegenüber über chemischen Einflüssen. Bekannt ist in diesem Zusammenhang die Verwendung von monofilamentem Polyethylen bzw. auch einem Gemisch aus Kevlar/Teflon.

Aus der EP 1007215 ist ein Band bekannt, das aus einzelnen parallel zueinander verlaufenden Gurten besteht, die durch einzelne quer zur Laufrichtung des Bandes verlaufende Stege miteinander verbunden sind. Sowohl die Gurte als auch die Stege verlaufen beabstandet zueinander, so dass sich ein netzartiges Gebilde ergibt. Im Einzelnen ist die Anordnung der Stege zwischen den Gurten derart getroffen, dass die die Gurte verbindenden Stege in einer Ebene liegen. Das Band ist, da es zum Abtrag der sich auf den Elektroden ansammelnden Partikel auf den Elektroden entlang schleift, starkem Abrieb unterworfen. Insbesondere ist das Band auch außerordentlich hohen Zugkräften ausgesetzt, wobei beide Einflussfaktoren, also sowohl das Schleifen des Bandes auf den Elektroden, als auch die von dem Band aufzunehmenden Zugkräfte, die Haltbarkeit des Bandes negativ beeinflussen.

Der Erfindung liegt daher die Aufgabe zugrunde, ein Band der eingangs genannten Art bereitzustellen, das eine höhere Haltbarkeit aufweist. Zur Lösung dieser Aufgabe wird erfindungsgemäß vorgeschlagen, dass die Stege längs der Gurte versetzt zueinander zwischen den Gurten angeordnet sind.

Wie bereits an anderer Stelle erläutert, ist beim Stand der Technik entsprechend der EP 1007215 die Anordnung der Stege derart getroffen, dass diese in einer Ebene, d. h. in einer Linie liegend, die einzelnen parallel zueinander verlaufenden Gurte miteinander verbinden. Das heißt, dass der Gurtquerschnitt im Bereich der Anbindung der Stege relativ groß ist, wobei jedoch im Gegensatz dazu die freie Länge der Gurte zwischen zwei Stegen einen geringeren Querschnitt aufweist. Das heißt, dass die bekannten Bänder im Bereich zwischen zwei Stegen häufig reißen. Durch die versetzte Anordnung der Stege wird nunmehr erreicht, dass die Gurte über ihre gesamte Länge durch die Stege eine Versteifung erfahren. Das heißt, dass derart ausgebildete Bänder aufgrund des höheren Querschnitts der Gurte durch die Anordnung der Stege höhere Standzeiten aufweisen und darüber hinaus in der Lage sind, höhere Zugkräfte zu übertragen, mithin die Reißfestigkeit erhöht ist.

Weitere vorteilhafte Merkmale und Ausbildungen sind den Unteransprüchen zu entnehmen.

So ist insbesondere vorgesehen, dass die Breite des Steges im Bereich der Anbindung an den Gurt etwa dem Abstand zwischen zwei benachbarten Stegen entspricht. Hieraus wird deutlich, dass dadurch, dass der Gurt über seine gesamte Länge wechselweise von jeweils einem Steg erfasst wird, einen vergleichsweise höheren Querschnitt aufweist, als dies beim Stand der Technik gemäß der EP 1007215 der Fall ist.

Im Einzelnen ist vorgesehen, dass der Steg auf seiner der Laufrichtung abgewandten Seite bogenförmig ausgebildet ist. Hierdurch soll erreicht werden, dass das Band genügend große Freiräume zwischen den Gurten und den Stegen bereitstellt, um einen Durchlass der einzelnen Partikel des Gemisches zu ermöglichen, aber dennoch die Verstärkungswirkung der Gurte durch die Anbindung der Stege erhalten bleibt.

Nach einem weiteren vorteilhaften Merkmal der Erfindung ist der Steg im Querschnitt keilförmig ausgebildet. Durch die keilförmige Ausbildung des Steges, wobei die Spitze des Keiles in Laufrichtung des Bandes verläuft, wird erreicht, dass die einzelnen von der Elektrode abgeriebenen Partikel eine Impulskomponente in Richtung auf den Zwischenraum zwischen den beiden Elektroden des Bandabscheiders erhalten.

Da die beiden Elektroden, auf denen das Band mit seinem Ober- und Untertrum entlang läuft, einen nur geringen Abstand aufweisen, kommt es immer wieder vor, dass das Ober- und das Untertrum miteinander in Berührung kommen, und durch den hierbei entstehenden Abrieb übermäßig schnell verschleißen. Um den Verschleiß des Bandes durch einen solchen Abrieb zu minimieren, ist vorgesehen, dass die Gurte eine Höhe haben, die größer ist als die Höhe der Stege, so dass die Gurte, wenn überhaupt, nur im Bereich der Gurte aneinander liegen zu kommen. Dies hat auch den Vorteil, dass hierdurch die Reibung vermindert wird, was sich einerseits positiv auf die Bereitstellung der Antriebskräfte für das Band auswirkt, andererseits aber auch die Zugkraft auf das Band wesentlich minimiert. Diesem Ziel dient auch die Maßnahme, die Höhe der Stege von der Mitte zu den Außenseiten hin zunehmen zu lassen, da hierdurch die einzelnen Gurte in ihrem Querschnitt durchaus verstärkt werden, ohne dass die Reibung und damit der Abrieb bei Aufeinanderreiben von Obertrum und Untertrum zunimmt.

Nach einem besonderen Merkmal der Erfindung ist vorgesehen, dass das Band einzelne miteinander verbundene Bandsegmente aufweist. Nach dem Stand der Technik und hier insbesondere nach dem Stand der Technik gemäß der EP 1007215 sind die einzelnen Bestandteile des Bandes, also Gurte und Stege, extrudiert und werden im plastischem Zustand miteinander verbunden. Dieses Verfahren zur Herstellung eines Bandes ist überaus aufwendig.

Durch die Herstellung einzelner Bandsegmente, beispielsweise im Spitzgussverfahren aus Polypropylen, Polyurethan oder thermoplastischen Elastomeren können überaus stabile und masshaltige Bänder hergestellt werden. Zusätzlich können die Gurte mit Glasfasern, Glaskugeln oder Aramidfasem verstärkt werden. Bekanntermaßen sind die Bänder an ihren Enden um Umlenkrollen geführt. Das heißt, dass die Bänder in diesem Bereich einer starken Biegung unterworfen sind. Um zu verhindern, dass das Band im Bereich der Verbindung einzelner Bandelemente reißt, ist nach einem besonders vorteilhaften Merkmal der Erfindung vorgesehen, dass die zu verbindenden Enden der Bandsegmente jeweils korrespondierend ein positives und ein negatives Bandende aufweisen, was bedeutet, dass die Verbindung der einzelnen Segmente sich über eine bestimmte Länge des Bandes verteilt erstreckt. Im Einzelnen ist vorgesehen, dass die positiven und die negativen Bandenden jeweils entsprechend dem Abstand der Stege von außen nach innen stufenförmig abgetreppt ausgebildet sind. Durch die stufenförmig abgetreppte Verbindung der Bandenden zweier Bandsegmente wird erreicht, dass während der Umlenkung des Bandes um die Umlenkrolle nicht die vollständige Verbindung gebogen wird, sondern ein Teil der Verbindung sich immer im ungebogenen Zustand befindet, was eine Verringerung der einwirkenden Kräfte bewirkt, was unmittelbar eine Erhöhung der Standzeit des Bandes zur Folge hat. Eine Verbindung der einzelnen Segmente erfolgt beispielsweise durch Ultraschallschweißen, verschmelzen oder durch Verkleben.

Anhand der Zeichnungen wird die Erfindung nachstehend beispielhaft näher erläutert:
- Fig. 1: zeigt zwei Bandsegmente eines Bandes für einen elektrischen Bandabscheider;
- Fig. 2: zeigt einen Schnitt gemäß der Linie II-I aus Fig. 1;
- Fig. 3: zeigt einen Schnitt gem. der Linie III-III aus Fig. 1;
- Fig. 4: zeigt schematisch einen elektrischen Bandabscheider.

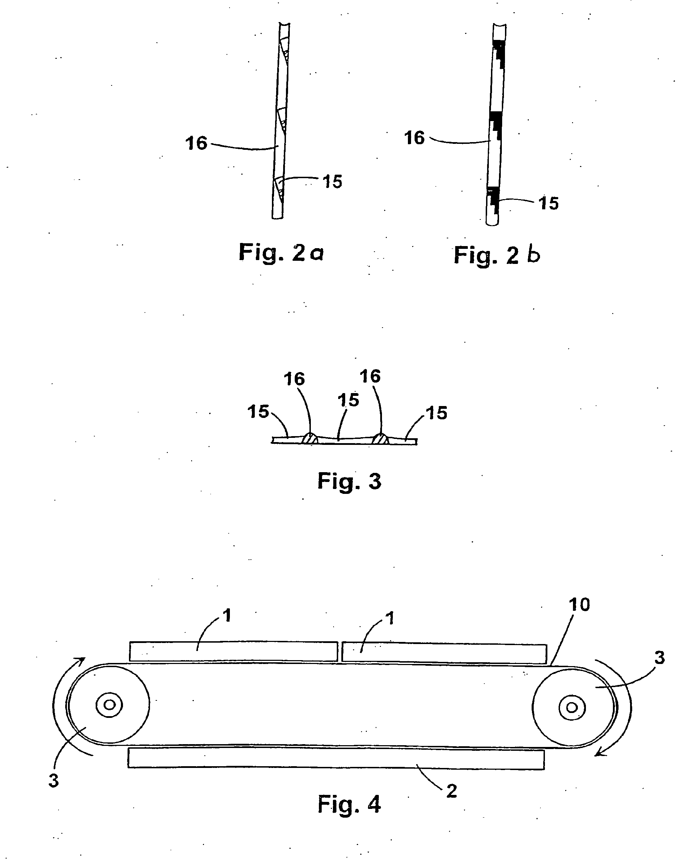

Der gemäß Fig. 4 schematisch dargestellte elektrische Bandabscheider zeigt das zwischen den Elektroden 1 und 2 verlaufende Band 10, das durch die Umlenkrollen 3 umgelenkt bzw. auch angetrieben wird.

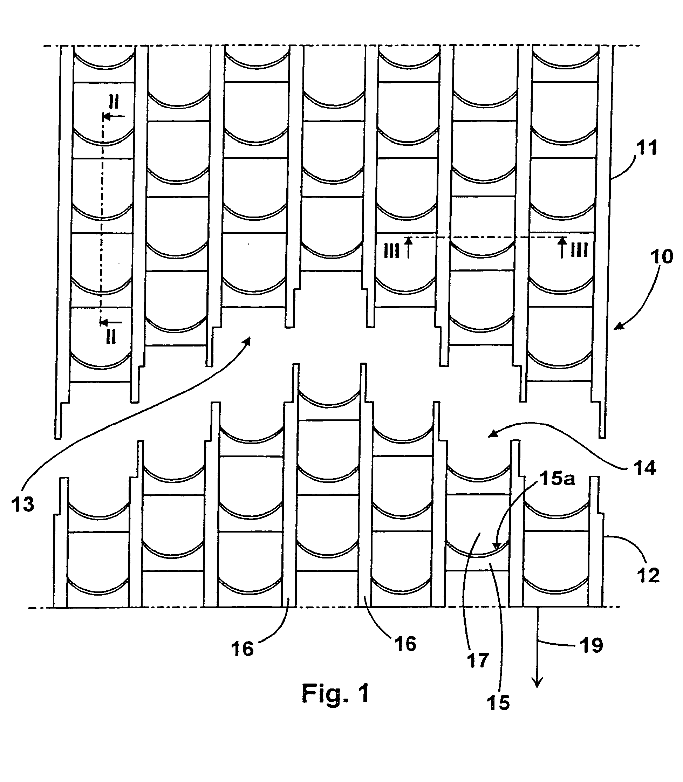

Gegenstand der Erfindung ist die Ausbildung des Bandes 10. Das Band besteht gemäß Fig. 1 aus einzelnen parallel und beabstandet zueinander verlaufenden Gurten 16, die durch versetzt und beabstandet zueinander verlaufende Stege 15 miteinander verbunden sind. Zwischen den Stegen 15 und den Gurten 16 sind Freiräume oder Durchlässe als Zwischenräume 17 ausgebildet. Aus Fig. 1 ergibt sich weiterhin ein Ausschnitt eines solchen Bandes 10, umfassend zwei Bandsegmente 11 und 12, wobei das Bandsegment 11 einen negatives Ende (Pfeil 13) und das Bandsegment 12 ein positives Ende (Pfeil 14) aufweist. Die beiden Enden 13 und 14 des jeweiligen Bandsegmentes 11 und 12 sind derart ausgebildet, dass diese ohne Unterbrechung der Bandgeometrie miteinander verbunden werden können. Die Verbindung geschieht beispielsweise durch Ultraschallschweißen, verschmelzen oder aber auch durch Verkleben. Wesentlich bei der Ausgestaltung der positiven bzw. negativen Enden der Bandsegmente 11 und 12 ist, dass die Ausbildung stufenförmig abgetreppt erfolgt. Das bedeutet, dass im Bereich eines jeden Steges 15 eine solche Stufe gebildet ist. Der Vorteil einer derart stufenförmig abgetreppten Verbindung der einzelnen Bandsegmente besteht darin, dass bei Führung des Bandes um die Umlenkrollen nicht die vollständige Verbindung der Bandsegmente auf Biegung beansprucht wird.

Wesentlich ist weiterhin, dass die einzelnen Stege 15 zwischen den Gurten 16 versetzt zueinander angeordnet sind. Hieraus wird deutlich, dass die Reissfestigkeit, insbesondere der Gurte des Bandes 10 dadurch wesentlich erhöht werden kann, dass durch die Anbindung der Stege die Gurte 16 eine Vergrößerung des Materialquerschnittes erfahren. Dies wirkt sich nicht nur positiv auf die Reißfestigkeit des Bandes insgesamt, sondern auch auf dessen Abriebfestigkeit aus.

Die Ausbildung der Stege ist derart, dass diese auf ihrer in Laufrichtung (Pfeil 19) abgewandten Seite (Pfeil 15a) bogenförmig ausgebildet sind, um den Zwischenraum 17 zwischen zwei Stegen zu maximieren. Das heißt, es wird eine Maximierung des Zwischenraumes 17 erreicht, ohne dass die Gurte 16 des Bandes in ihrem Querschnitt geschwächt sind.

In Bezug auf die Ausbildung der Stege wird auf Fig. 2 verwiesen. So ist aus Fig. 2a insbesondere die keilförmige Ausbildung der Stege erkennbar. In Fig. 2b wird eine treppenförmige Ausbildung der Stege offenbart, durch die das Trenngut eine zusätzliche Richtungsbeeinflussung in Gurtlaufrichtung erhält. Aus Fig. 3 ist erkennbar, dass die Gurte 16 höher sind, als die sie verbindenden Stege 15.

Weiterhin können z. B. die beiden außenliegenden Gurte 16 auch breiter ausgeführt werden.

## Patentansprüche

1. Band (10) eines elektrischen Bandabscheiders zum Trennen der Bestandteile eines Gemisches, wobei das Band (10) mehrere längs der Laufrichtung des Bandes beabstandet und parallel zueinander verlaufende Gurte (16) aufweist, wobei die Gurte (16) durch quer zur Laufrichtung des Bandes beabstandet zueinander verlaufende Stege (15) miteinander verbunden sind, **dadurch gekennzeichnet, dass** die Stege (15) längs der Gurte (16) versetzt zueinander zwischen den Gurten (16) angeordnet sind.

2. Band eines Bandabscheiders nach Anspruch 1, **dadurch gekennzeichnet, dass** die Breite des Steges (16) im Bereich der Anbindung an den Gurt (16) etwa dem Abstand zwischen zwei benachbarten Stegen (15) entspricht.

3. Band eines Bandabscheiders nach Anspruch 2, **dadurch gekennzeichnet, dass** der Steg (15) auf seiner der Laufrichtung des Bandes (10) abgewandten Seite bogenförmig ausgebildet ist.

4. Band eines Bandabscheiders nach einem oder mehreren der voranstehenden Ansprüche, **dadurch gekennzeichnet, dass** der Steg (15) im Querschnitt keilförmig ausgebildet ist.

5. Band eines Bandabscheiders nach einem oder mehreren der Ansprüche 1 bis 3, **dadurch gekennzeichnet, dass** der Steg (15) im Querschnitt treppenförmig ausgebildet ist.

6. Band eines Bandabscheiders nach einem oder mehreren der voranstehenden Ansprüche, **dadurch gekennzeichnet, dass** die Höhe der Gurte (16) größer ist als die Höhe der Stege (15).

7. Band eines Bandabscheiders nach einem oder mehreren der voranstehenden Ansprüche, **dadurch gekennzeichnet, dass** die Höhe des Steges (15) von der Mitte zu den Außenseiten hin zunimmt.

8. Band eines Bandabscheiders nach einem oder mehreren der voranstehenden Ansprüche, **dadurch gekennzeichnet, dass** das Band (10) einzelne miteinander verbundene Bandsegmente (11, 12) aufweist.

9. Band eines Bandabscheiders nach Anspruch 7, **dadurch gekennzeichnet, dass** die zu verbindenden Enden der Bandsegmente (11, 12) jeweils korrespondierend ein positives und ein negatives Bandende (13, 14) aufweisen.

10. Band eines Bandabscheiders nach Anspruch 8, **dadurch gekennzeichnet, dass** die positiven und die negativen Bandenden (13, 14) jeweils entsprechend dem Abstand der Stege (15) von außen nach innen stufenförmig abgetreppt ausgebildet sind.

11. Band eines Bandabscheiders nach einem oder mehreren der voranstehenden Ansprüche, **dadurch gekennzeichnet, dass** die Bandsegmente (11, 12) im Spritzgussverfahren aus Kunststoff, z. B. Polypropylen, Polyurethan oder einem thermoplastischen Elastomer hergestellt sind.

12. Band eines Bandabscheiders nach einem oder mehreren der voranstehenden Ansprüche, **dadurch gekennzeichnet, dass** die Gurte (16) der Bandsegmente (11, 12) zusätzlich mit Glasfasern verstärkt sind.

13. Band eines Bandabscheiders nach einem oder mehreren der voranstehenden Ansprüche, **dadurch gekennzeichnet, dass** die Gurte (16) der Bandsegmente (11, 12) zusätzlich mit Glaskugeln verstärkt sind.

14. Band eines Bandabscheiders nach einem oder mehreren der voranstehenden Ansprüche, **dadurch gekennzeichnet, dass** die Gurte (16) der Bandsegmente (11, 12) zusätzlich mit Aramidfasern verstärkt sind.

15. Band eines Bandabscheiders nach einem oder mehreren der voranstehenden Ansprüche, **dadurch gekennzeichnet, dass** die beiden außenliegenden Gurte (16) der Bandsegmente (11, 12) breiter als die übrigen Gurte (16) ausgeführt sind.

## Claims

1. A belt (10) of an electrical belt separator for separating the constituents of a mixture, wherein the belt (10) has a plurality of straps (16) which extend in mutually parallel spaced relationship along the direction of movement of the belt, wherein the straps (16) are connected together by cross-pieces (15) extending in spaced relationship with each other transversely with respect to the direction of movement of the belt, **characterised in that** the cross-pieces (15) are arranged between the straps (16) in mutually displaced relationship along the straps (16).

2. A belt of a belt separator according to claim 1 **characterised in that** the width of the cross-piece (15) in the region of the connection to the strap (16) approximately corresponds to the spacing between two adjacent cross-pieces (15).

3. A belt of a belt separator according to claim 2 **characterised in that** the cross-piece (15) is of an arcuate configuration on its side remote from the direction of movement of the belt (10).

4. A belt of a belt separator according to one or more of the preceding claims **characterised in that** the cross-piece (15) is of a wedge-shaped configuration in cross-section.

5. A belt of a belt separator according to one or more of claims 1 to 3 **characterised in that** the cross-piece (15) is of a stepped configuration in cross-section.

6. A belt of a belt separator according to one or more of the preceding claims **characterised in that** the height of the straps (16) is greater than the height of the cross-pieces (15).

7. A belt of a belt separator according to one or more of the preceding claims **characterised in that** the height of the cross-piece (15) increases from the centre towards the outsides.

8. A belt of a belt separator according to one or more of the preceding claims **characterised in that** the belt (10) has individual interconnected belt segments (11, 12).

9. A belt of a belt separator according to claim 7 **characterised in that** the ends to be connected of the belt segments (11, 12) respectively correspondingly have a positive and a negative belt end (13, 14).

10. A belt of a belt separator according to claim 8 **characterised in that** the positive and the negative belt ends (13, 14) are each of an offset stepped configuration from the outside inwardly to correspond to the spacing of the cross-pieces (15).

11. A belt of a belt separator according to one or more of the preceding claims **characterised in that** the belt segments (11, 12) are produced using an injection moulding method from plastic material, for example polypropylene, polyurethane or a thermoplastic elastomer.

12. A belt of a belt separator according to one or more of the preceding claims **characterised in that** the straps (16) of the belt segments (11, 12) are additionally reinforced with glass fibres.

13. A belt of a belt separator according to one or more of the preceding claims **characterised in that** the straps (16) of the belt segments (11, 12) are additionally reinforced with glass balls.

14. A belt of a belt separator according to one or more of the preceding claims **characterised in that** the straps (16) of the belt segments (11, 12) are additionally reinforced with aramid fibres.

15. A belt of a belt separator according to one or more of the preceding claims **characterised in that** the two outwardly disposed straps (16) of the belt segments (11, 12) are wider than the other straps (16).

## Revendications

1. Ruban (10) d'un séparateur électrique à bande, pour séparer les constituants d'un mélange, dans lequel le ruban a plusieurs lanières s'étendant parallèlement entre elles et à distance le long de la direction de déplacement de la bande, les lanières (16) étant reliées entre elles par des traverses (15) s'étendant en étant à distance entre elles transversalement à la direction de déplacement du ruban, **caractérisé en ce que** les traverses (15) sont disposées entre les lanières (16) en étant décalées entre elles le long de la lanière (16).

2. Ruban d'un séparateur à bande suivant la revendication 1, **caractérisé en ce que** la largeur de la traverse (16) dans la région de la liaison à la lanière (16 ) correspond à peu près à la distance entre deux traverses (15 ) voisines.

3. Ruban d'un séparateur à bande suivant la revendication 2, **caractérisé en ce que** la traverse (15) est arquée sur son côté éloigné de la direction de déplacement du ruban.

4. Ruban d'un séparateur à bande suivant l'une ou plusieurs des revendications précédentes, **caractérisé en ce que** la traverse (15) a une section transversale cunéiforme.

5. Ruban d'un séparateur à bande suivant l'une ou plusieurs des revendications 1 à 3, **caractérisé en ce que** la traverse (15) a une section transversale en escalier.

6. Ruban d'un séparateur à bande suivant l'une ou plusieurs des revendications précédentes, **caractérisé en ce que** la hauteur des lanières (16) est plus grande que la hauteur des traverses (15).

7. Ruban d'un séparateur à bande suivant l'une ou plusieurs des revendications précédentes, **caractérisé en ce que** la hauteur de la traverse (15) augmente du milieu au côté extérieur.

8. Ruban d'un séparateur à bande suivant l'une ou plusieurs des revendications précédentes, **caractérisé en ce que** le ruban (10) a des segments (11, 12) de ruban individuels reliés entre eux.

9. Ruban d'un séparateur à bande suivant la revendication 7, **caractérisé en ce que** les extrémités à relier des segments (11, 12) de ruban ont en correspondance une extrémité (13) de ruban positive et une extrémité (14) de ruban négative.

10. Ruban d'un séparateur à bande suivant la revendication 8, **caractérisé en ce que** les extrémités (13, 14 ) de ruban positive et négative sont constituées en escalier par degré de l'extérieur vers l'intérieur en fonction de la distance entre les traverses (15).

11. Ruban d'un séparateur à bande suivant l'une ou plusieurs des revendications précédentes, **caractérisé en ce que** les segments (11, 12) de ruban sont fabriqués par un procédé d'injection en matière plastique, par exemple en polypropylène, en polyuréthane ou en un élastomère thermoplastique.

12. Ruban d'un séparateur à bande suivant l'une ou plusieurs des revendications précédentes, **caractérisé en ce que** les lanières (16) des segments (11, 12) de ruban sont renforcées en outre par des fibres de verre.

13. Ruban d'un séparateur à bande suivant l'une ou plusieurs des revendications précédentes, **caractérisé en ce que** les lanières (16) des segments (11, 12) de ruban sont renforcées supplémentairement par des billes de verre.

14. Ruban d'un séparateur à bande suivant l'une ou plusieurs des revendications précédentes, **caractérisé en ce que** les lanières (16) des segments (11, 12) de ruban sont renforcées supplémentairement par des fibres d'aramide.

15. Ruban d'un séparateur à bande suivant l'une ou plusieurs des revendications précédentes, **caractérisé en ce que** les deux lanières (16) extérieures des segments (11, 12) de ruban sont plus larges que les autres lanières (16).
